**Europäisches Patentamt**

**European Patent Office**

**Office européen des brevets**

(11) Veröffentlichungsnummer: **0 129 047**
**B1**

(12) **EUROPÄISCHE PATENTSCHRIFT**

(45) Veröffentlichungstag der Patentschrift: **29.08.90**

(51) Int. Cl.⁵: **A 01 B 33/14**

(21) Anmeldenummer: **84105397.8**

(22) Anmeldetag: **12.05.84**

(54) **Bodenbearbeitungsgerät für die Landwirtschaft mit Zinkenrotor.**

(30) Priorität: **16.06.83 DE 8317606 u**

(43) Veröffentlichungstag der Anmeldung:
**27.12.84 Patentblatt 84/52**

(45) Bekanntmachung des Hinweises auf die
Patenterteilung:
**29.08.90 Patentblatt 90/35**

(84) Benannte Vertragsstaaten:
**AT CH DE FR GB IT LI NL**

(56) Entgegenhaltungen:
**EP-A-0 033 950**
**AU-B- 59 246**
**FR-A- 897 276**
**FR-A-2 430 172**
**GB-A-1 464 715**
**GB-A-2 014 021**
**US-A-2 765 719**
**US-A-3 233 685**
**US-A-3 246 704**
**US-A-3 734 197**

(73) Patentinhaber: **Maschinenfabrik Rau GmbH**
**Johannes-Rau-Strasse**
**D-7315 Weilheim (DE)**

(72) Erfinder: **Rau, Willy**
**Johannes-Rau-Strasse**
**D-7315 Weilheim (DE)**
Erfinder: **Taus, Christian, Ing.**
**Galgenberg 19**
**D-7312 Kirchheim (DE)**

(74) Vertreter: **Dipl.-Phys.Dr. Manitz Dipl.-Ing.**
**Finsterwald Dipl.-Ing. Grämkow Dipl.-Chem.Dr.**
**Heyn Dipl.-Phys. Rotermund Morgan,**
**B.Sc.(Phys)**
**Seelbergstrasse 23/25**
**D-7000 Stuttgart 50 (DE)**

**Beschreibung**

Die Erfindung betrifft ein Bodenbearbeitungsgerät für die Landwirtschaft mit einem eigenen Antrieb, z.B. über Zapfwelle, aufweisenden Zinkenrotor, dessen Rotorwelle bzw. -nabe etwa quer zur Fahrt- bzw. Arbeitsrichtung des Bodenbearbeitungsgerätes angeordnet ist und dessen Zinken beim Umlauf des Zinkenrotors mit austauschbar in hülsenförmigen Halteteilen angeordneten Zinkenteilen, deren Längsachse mit radialem Abstand an der Achse der Rotorwelle bzw. -nabe vorbeilaufen, in die Bodenfläche eingreifen sowie erfaßte Bodenschichten unter Lockerung und Einebnung vermengen, wobei die hülsenförmigen Halteteile an Haltearmen und die als Zinkenendstücke ausgebildeten austauschbaren Zinkenteile sowie die Haltearme — bei Achsansicht des Zinkenrotors — unter einem in Umlaufrichtung geöffneten Winkel zueinander angeordnet sind, derart, daß ein jeweils von der Achse der Rotorwelle bzw. -nabe zum freien Ende des jeweiligen Zinkenendstückes verlaufender Radialstrahl den Verbindungsbereich zwischen der Rotorwelle bzw. -nabe und dem Haltearm in einem etwa mittleren Bereich durchsetzt.

Ein solches Gerät ist aus der EP-A-33950 bekannt.

Ein entsprechendes Bodenbearbeitungsgerät wird auch in der GB-A 20 14 021 beschrieben. Durch die angegebene Ausrichtung der Achsen der austauschbaren Zinkenteile kann erreicht werden, daß die Zinkenenden beim Auftreffen auf die Bodenoberfläche zunächst eine Stichbewegung ausführen und die Zinken dementsprechend leichter in den Boden eindringen können.

Gemäß der GB-A 20 14 021 sind die austauschbaren Zinkenteile in Muffen gehalten, die tangential auf der Außenumfangsfläche der Rotorwelle angeordnet sind. Aus diesem Grunde müssen die austauschbaren Zinkenteile eine relativ große Länge besitzen. Dies ist insofern nachteilig, als die austauschbaren Zinkenteile bei der Bodenarbeit verschleißen und deshalb von Zeit zu Zeit ausgetauscht werden müssen. Im Falle einer Ausführungsform entsprechend der GB-A 20 14 021 müssen also relativ große und damit teure Teile ausgewechselt werden.

Darüber hinaus ist die in der GB-A 20 14 021 beschriebene Ausbildung des Zinkenrotors festigkeitsmäßig nicht optimal. Wenn nämlich die Zinken in den Boden eingreifen und denselben aufreißen, so wird der Verbindungsbereich zwischen den die austauschbaren Zinkenteile halternden Muffen und der Rotorwelle sehr stark belastet, denn der der Zinkenarbeit entgegengesetzte Widerstand des Bodens wirkt mit großem Hebelarm auf den genannten Verbindungsbereich ein.

Aus der FR-A 897 276 ist ein Messerrotor bekannt, dessen Messer etwa radial zur Achse der Rotorwelle angeordnet sind und entgegen der Umlaufrichtung säbelartig umgebogene Messerenden besitzen. Die Messer sind gemäß der Zeichnung austauschbar an der Rotorwelle gehaltert. Zwar sind Einzelheiten der Halterung nicht erkennbar. Jedoch müssen zum Austausch der Messer in grundsätzlich ähnlicher Weise wie zum Austausch der Zinkenteile beim Zinkenrotor der GB-A 20 14 021 Muttern, Schrauben bzw. Bolzen in unmittelbarer Nähe der Rotorwelle und damit an relativ schwer zugänglicher Stelle gelöst werden.

Aufgabe der Erfindung ist es nun, ein Bodenbearbeitungsgerät mit Zinkenrotor zu schaffen, welcher sich einerseits durch hohe Stabilität und Wirksamkeit bei der Bodenarbeit auszeichnet und dessen Zinken andererseits leicht ausgetauscht werden können.

Diese Aufgabe wird erfindungsgemäß dadurch gelöst, daß jedes Zinkenendstück auf der entgegen der Umlaufrichtung weisenden Außenseite seines Mittelabschnittes, welcher an den im Halteteil aufgenommenen Abschnitt des Zinkenendstückes anschließt und dicker als der zuletztgenannte Abschnitt ist, von einem am jeweiligen Haltearm ausgebildeten, an das hülsenförmige Halteteil anschließenden verstärkten Rand abgestützt ist, welcher die Außenseite U-förmig umfaßt.

Gemäß der Erfindung müssen also jeweils nur die bei der Bodenarbeit verschleißenden Bereiche der Zinken, d.h. deren Zinkenendstücke, ausgetauscht werden. Dieser Austausch ist kostengünstig, weil die Austauschteile vergleichsweise klein sind. Des weiteren ist bei der Erfindung vorteilhaft, daß die den Zinkenendstücken zugeordneten hülsenförmigen Halteteile mit relativ großem Abstand von der Rotorachse bzw. -nabe und damit gut zugänglich angeordnet sind. Außerdem wird der Verbindungsbereich zwischen den Zinkenendstücken und den Haltearmen bzw. -teilen im Vergleich zu einer Anordnung, bei der komplette Zinken unmittelbar an der Nabe des Zinkenrotors austauschbar gehalten sind, während der Bodenarbeit vergleichsweise wenig beansprucht, so daß die hülsenförmigen Halteteile für die Zinkenendstücke an den Haltearmen entsprechend leicht konstruiert sein können.

Aufgrund der Querschnittsänderung zwischen dem Mittelabschnitt des Zinkenendstückes und dem im hülsenförmigen Halteteil aufgenommenen Abschnitt kann sich das Zinkenendstück bei der Bodenarbeit nicht innerhalb des hülsenförmigen Aufnahmeteiles verkeilen, so daß ein späteres Auswechseln immer ohne Schwierigkeiten möglich ist. Darüber hinaus genügt zur Sicherung des Zinkenendstückes in dem hülsenförmigen Aufnahmeteil ein leichtes Bolzenteil, beispielsweise ein Schraubbolzen, da eine Scherbeanspruchung dieses Sicherungsteiles aufgrund der stabilen Lagerung des Zinkenendstückes verhindert wird.

Der am Haltearm angeordnete verstärkte Rand, welcher das Zinkenendstück auf dessen entgegen der Umlaufrichtung weisenden Außenseite U-förmig umfaßt, stützt den Mittelabschnitt des Zinkenendstückes bei der Bodenarbeit wirksam ab, so daß das Zinkenendstück im Bereich der Querschnittsänderung zwischen seinem Mittelabschnitt und dem in das hülsenförmige Halteteil eingesetzten Abschnitt weder auf Biegung noch auf Scherung beansprucht wird.

Darüber hinaus besteht aufgrund dieser Anordnung die Möglichkeit, Zinkenendstücke mit unterschiedlichen Querschnitten der die Bodenarbeit übernehmenden Abschnitte zu verwenden. Es muß lediglich gegebenenfalls durch außermittige Anordnung des in das hülsenförmige Halteteil eingesetzten Abschnittes gewährleistet sein, daß der Mittelabschnitt des Zinkenendstückes am verstärkten Rand anliegt.

Da der Verbindungsbereich zwischen Rotorwelle bzw. -nabe und Haltearm so angeordnet ist, daß ein jeweils von der Achse der Rotorwelle bzw. -nabe zum freien Ende des jeweiligen Zinkenendstückes verlaufender Radialstrahl den Verbindungsbereich in einem mittleren Bereich — in Achsansicht des Rotors gesehen — durchsetzt, kann eine besonders gute Stabilität gewährleistet werden.

In konstruktiv besonders bevorzugter Weise besitzen die etwa C- oder H-artiges Profil aufweisenden geschmiedeten Haltearme an ihren radial inneren Enden eine zwischen den C- bzw. H-Schenkeln erstreckte, der Krümmung der Umfangsfläche der Rotorwelle bzw. -nabe angepaßte Verbindungsfläche und an ihren radial äußeren Enden die hülsenartigen Halteteile, deren Außendurchmesser etwa der von Außenseite zu Außenseite der Schenkel gemessenen Breite der Haltearme entspricht und deren Aufnahmeöffnung zwischen den Schenkeln etwa parallel zu denselben verläuft, wobei der den Mittelabschnitt der Endstücke abstützende Rand die genannten Schenkel U-artig verbindet.

Der mit der Rotorwelle bzw. -nabe verschweißte Verbindungsbereich bzw. die entsprechende Verbindungsfläche der Haltearme erstreckt sich in Umfangsrichtung bevorzugt etwa über einen Viertelkreis.

Da der Zinkenrotor an beiden Enden seiner Achse gelagert ist, wobei das zum Rotorantrieb dienende Getriebe auf einer Geräteseite angeordnet ist, ist die Gesamtbreite des Bodenbearbeitungsgerätes notwendigerweise größer als die Abmessung des Zinkenrotors in Richtung seiner Achse. Gleichwohl ist es erwünscht, die Breite des Wirkungsbereiches des Zinkenrotors bei der Bodenarbeit möglichst weitgehend an die Gesamtbreite des Gerätes anzunähern. Dadurch kann vermieden werden, daß seitliche, den Zinkenrotor überragende Geräteteile einen benachbarten bereits bearbeiteten Bodenstreifen wieder teilweise zerstören, wenn ein Feld nacheinander auf nebeneinanderliegenden Bodenstreifen bearbeitet wird. Im übrigen ist ein möglichst breiter Wirkungsbereich des Zinkenrotors auch deshalb erwünscht, weil im Hinblick auf die im Straßenverkehr zulässige maximale Breite eines Fahrzeuges Schranken für die Gesamtbreite des Gerätes gesetzt sind, innerhalb dieser Grenzen jedoch eine möglichst große Arbeitsbreite des Gerätes erreicht werden soll.

In diesem Zusammenhang sind die folgenden Merkmale zweckmäßig und vorteilhaft.

Zunächst können die an den Enden der Rotorachse angeordneten Haltearme bzw. Halteteile als Teil dort angeordneter Befestigungsflansche der Rotorachse ausgebildet bzw. mit den Befestigungsflanschen verbunden sein. Damit wird der in Längsrichtung der Rotorachse an derselben für die Zinken zur Verfügung stehende Raum maximal ausgenutzt. Da jede Zinke bei der Bodenarbeit eine gewisse Breitenwirkung hat, kann also, je nach Form der Zinkenenden, ein Wirkungsbereich des Zinkenrotors erreicht werden, dessen Breite deutlich größer als die Länge der Rotorachse zwischen den Befestigungsflanschen ist.

Zusätzlich — gegebenenfalls auch alternativ — können die Endbereiche der endseitig der Rotorachse angeordneten Zinken, bzw. zumindest der Endbereich der am getriebeseitigen Ende der Rotorachse angeordneten Zinke, in Richtung der Rotorachse zur jeweiligen Geräteseite hin ausgestellt sein. Das ausgestellte Zinkenende ragt also gegebenenfalls mehr oder weniger weit über das benachbarte Ende der Rotorachse hinaus und vergrößert dementsprechend den Wirkungsbereich des Zinkenrotors.

Schließlich können seitlich vor dem Zinkenrotor, zumindest auf der Seite des die Rotorachse antreibenden Rotorgetriebes, in den Boden eingreifende Schneid- bzw. Schälwerkzeuge angeordnet sein, welche die Erde eines in Fahrtrichtung vor einem seitlichen Rotorlager bzw. vor dem Rotorgetriebe liegenden Bodenstreifens seitwärts in den Arbeitsbereich des Rotors schiebt. Da der Zinkenrotor — insbesondere bei Umlauf in die Fahrtrichtung unterstützender Richtung — die erfaßte Erde auch schräg zu den Seiten hin wegschleudert, wird die von den Schneid- bzw. Schälwerkzeugen bewirkte Seitwärtsverschiebung des Erdmaterials wieder rückgängig gemacht, so daß insgesamt ein der Gerätebreite entsprechender Arbeitsstreifen bearbeitet werden kann.

Als Schneid- bzw. Schälwerkzeuge können insbesondere zur Fahrtrichtung schräggestellte Messerräder angeordnet sein.

Im übrigen können die Schneid bzw. Schälwerkzeuge bzw. die Messerräder mittels einer verstellbaren Halterung gegebenenfalls aus einer Arbeitsstellung in eine zur Gerätemitte hin verschobene Transportstellung verschiebbar sein, wenn die zulässige Straßenfahrbreite des Gerätes in Arbeitsstellung der genannten Werkzeuge überschritten wird.

Taumelbewegungen des Gerätes, d.h. Schwenkbewegungen um die Gerätelängsachse, können bei der Bodenbearbeitung gegebenenfalls durch höheneinstellbare Kufen an den Geräteseiten verhindert bzw. stark begrenzt werden. Bei Anordnung der vorgenannten Schneid- bzw. Schälwerkzeuge seitlich vor dem Zinkenrotor laufen diese Kufen in von den Schneid- bzw. Schälwerkzeugen hinterlassenen Bodenrinnen, die bei der Arbeit des Gerätes vom Zinkenrotor hinter den Kufen wieder gefüllt werden.

Um vom Zugfahrzeug des Bodenbearbeitungsgerätes hinterlassene Radspuren wirksam einzuebnen, können vor dem Zinkenrotor in bekannter Weise Scharwerkzeuge od.dgl. angeordnet sein, die das von den Rädern zur Seite gedrängte Erdreich wieder zurückschieben. Derartige Scharwerkzeuge stellen jedoch an die Zugkraft des Zugfahrzeuges erhöhte Anforderungen. Aus diesem Grunde ist es vorteilhaft, am Zinkenrotor, welcher bevorzugt in die Fahrtrichtung unterstützender Laufrichtung umläuft, im Bereich der genannten Spuren verbreiterte Zinken anzuordnen, insbesondere solche mit schaufelartigen Endbereichen, wobei die Schaufelflächen vorzugsweise zur Seitwärtsverlagerung der Erde unter einem Winkel zur Umlaufrichtung ausgerichtet sind.

Um zu verhindern, daß der Zinkenrotor aufgeworfene Erde bzw. Steine gegen hinter den Zinkenrotor angeordnete Geräteteile werfen kann, ist in an sich bekannter Weise eine Prallfläche vorgesehen, welche das Rotorgehäuse nach hinten oben abschließt und um eine Gerätequerachse schwenkgelagert und federbar ist. Diese Prallplatte ist vorzugsweise doppelwandig ausgebildet, um zu verhindern, daß auftreffende Steine od.dgl. von der Außenseite sichtbare Beulen hervorrufen können. Dabei ist die Außenwand der Prallplatte vorzugsweise an der Schwenkachse gelagert, während die Innenwand an ihren oberen und unteren Rändern unter Zwischenschaltung elastischer Matten auf der Außenwand befestigt ist; dabei bildet die am unteren Rand angeordnete Matte eine nachgiebige Fortsetzung der Prallplatte und kann gegebenenfalls den vom Zinkenrotor bearbeiteten Boden glattstreichen, die am oberen Rand angeordnete Matte deckt einen im Bereich der Schwenkachse gebildeten Spalt zwischen der Prallplatte und dem Rotorgehäuse ab, so daß die Schwenkachse bzw. die Schwenkgelenke gegen Verschmutzungen geschützt sind.

Nachfolgend wird die Erfindung anhand bevorzugter Ausführungsbeispiele näher erläutert, die in der Zeichnung dargestellt sind. Dabei zeigen

Fig. 1 eine schematisierte Frontansicht des erfindungsgemäßen Bodenbearbeitungsgerätes,

Fig. 2 eine schematisierte Seitenansicht einer Gerätekombination, die neben einem Zinkenrotor auch eine anhebbare Drillmaschine umfaßt,

Fig. 3 eine weitere Seitenansicht in konstruktiverer Darstellung, wobei das dargestellte Bodenbearbeitungsgerät lediglich einen Zinkenrotor zur Bodenbearbeitung umfaßt,

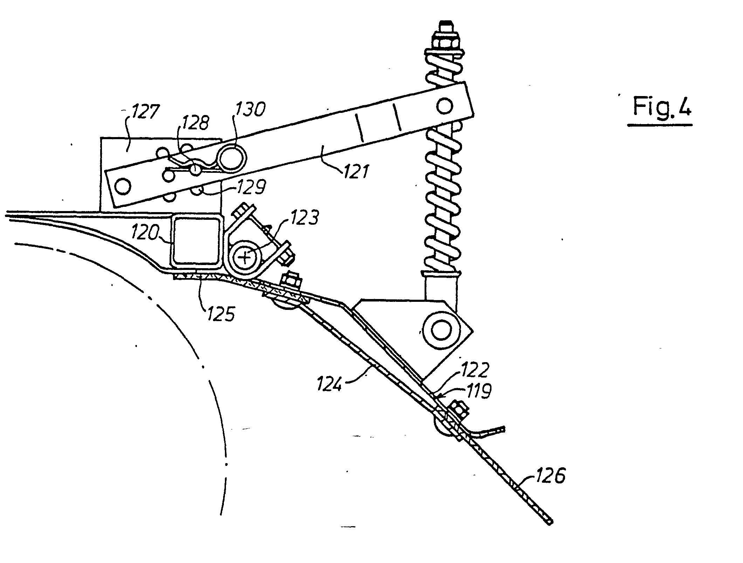

Fig. 4 ein Schnittbild der hinter dem Zinkenrotor angeordneten Prallplatte,

Fig. 5 eine Ansicht einer Zinke des Zinkenrotors gemäß einer ersten bevorzugten Ausführungsform in Blickrichtung entgegen der Umlaufrichtung,

Fig. 6 eine teilweise geschnittene Ansicht dieser Zinke in Achsrichtung des Zinkenrotors und

Fig. 7 bis 9 verschiedene Formen für die Zinkenendstücke der Zinken.

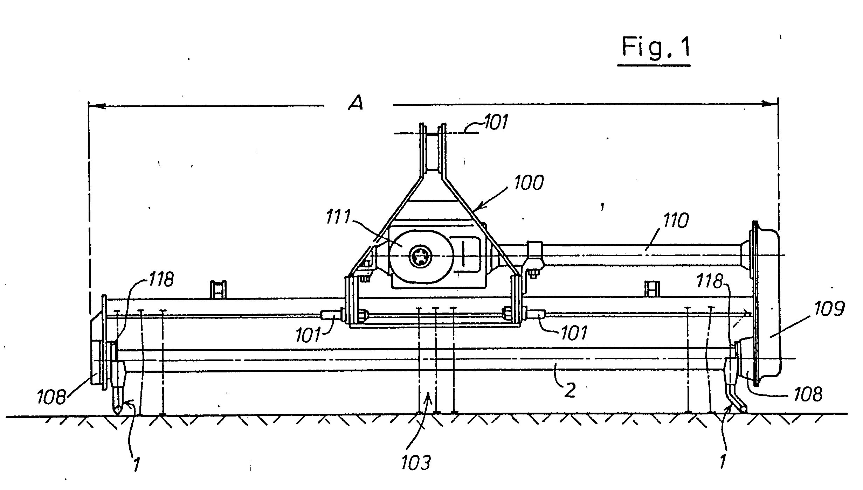

Gemäß den Figuren 1 bis 3 besitzt das Bodenbearbeitungsgerät einen kurzen bockartigen Rahmen 100 mit Anschlußpunkten 101 (Zapfen bzw. Bohrungen) für ein Dreipunktgestänge eines nicht dargestellten Zugfahrzeuges.

Unter den kurzen Längsholmen 102 ist das Gehäuse bzw. der Rahmen eines Zinkenrotors 103 befestigt.

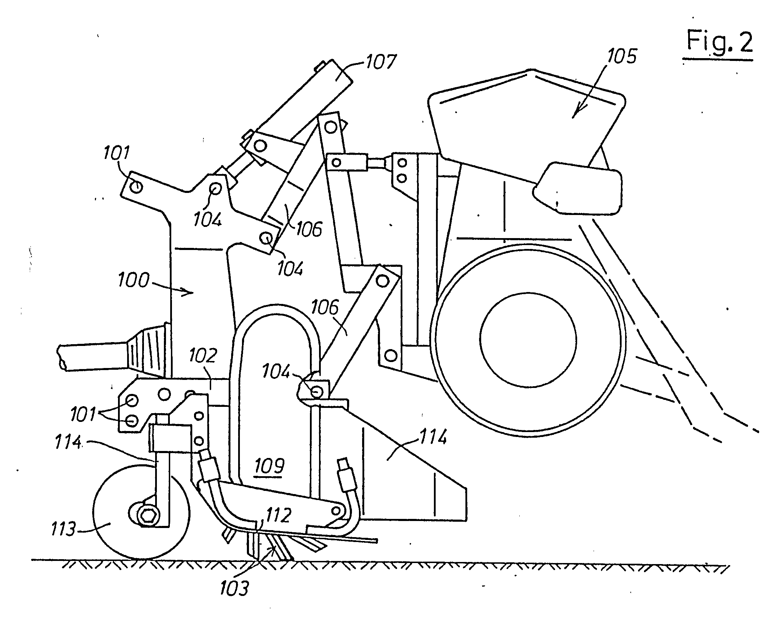

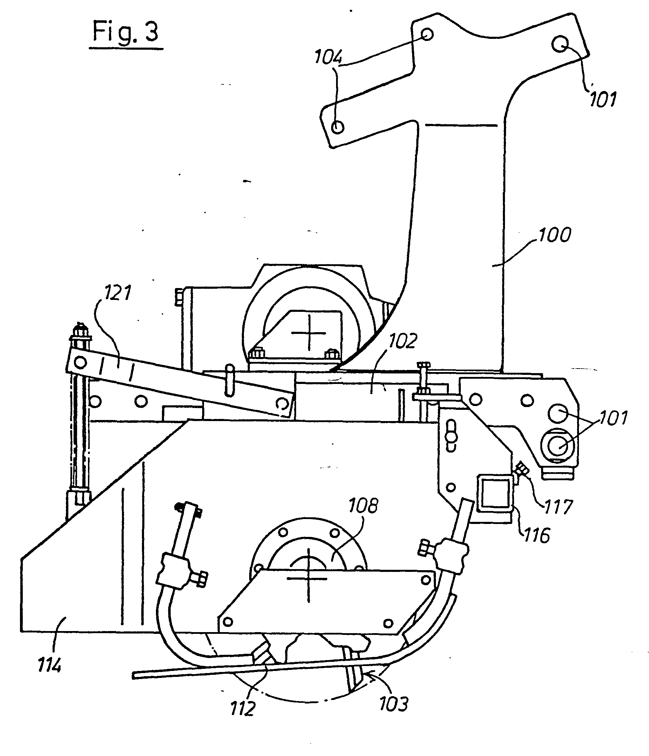

Darüber hinaus sind am bockartigen Rahmen 100 weitere Anschlußpunkte 104 vorgesehen, um auf der Rückseite des bockartigen Rahmens 100 weitere Geräte starr oder, wie Fig. 2 zeigt, beweglich anzuschließen. Im dargestellten Beispiel ist eine Drill- bzw. Sämaschine 105 mittels parallelogrammartig angeordneter Anschlußlenker 106 unmittelbar hinter dem Zinkenrotor 103 angeordnet. Dabei dient ein Hydraulikaggregat 107 dazu, die Drill- bzw. Sämaschine aus einer hinter dem Zinkenrotor 103 abgesenkten Arbeitslage in die in Fig. 3 dargestellte Transportstellung anzuheben, bei der der Schwerpunkt der Drill- bzw. Sämaschine 105 nach vorn verlagert wird.

Der bei der Bodenarbeit in Umlaufrichtung U, d.h. in die Fahrt unterstützender Richtung umlaufende Zinkenrotor 103 ist seitlich am Rotorgehäuse in Lagern 108 drehgelagert. Auf der einen Geräteseite ist zum Antrieb des Zinkenrotors ein Getriebe, beispielsweise ein Kettengetriebe 109, angeordnet, welches seinerseits über eine Welle 110 mit einem innerhalb des bockartigen Rahmens 100 angeordneten, über eine nicht dargestellte Zapfwelle vom Zugfahrzeug aus angetriebenen Getriebe 111 antriebsmäßig verbunden ist.

Um die Lager 108 bzw. das Getriebe 109 gegen Steine u.dgl. zu schützen, sind seitlich am Gehäuse bzw. Rahmen des Zinkenrotors 103 höhenverstellbare Kufen 112 angeordnet, welche außerdem dazu dienen, Taumelbewegungen des Gerätes bei der Bodenbearbeitung zu verhindern.

Die Lager 108, das Kettengetriebe 109 bzw. die Kufen 112 sind notwendigerweise seitlich neben den Stirnenden des Zinkenrotors 103 angeordnet, so daß die Gesamtbreite A des Gerätes deutlich größer als die Abmessung des Zinkenrotors 103 in Gerätequerrichtung ist. Gleichwohl kann erfindungsgemäß jedoch erreicht werden, daß die Arbeitsbreite, d.h. die Breite des jeweils bearbeiteten Bodenstreifens annähernd der Gesamtbreite A des Gerätes entspricht. Dies kann einerseits durch eine weiter unten erläuterte besondere Anordnung bzw. Ausgestaltung der Rotorzinken erreicht werden. Andererseits können dazu alternativ oder zusätzlich seitlich vor dem Zinkenrotor 103 Messerräder 113 angeordnet sein, welche — in Draufsicht von oben auf das Gerät — schräg zur Fahrtrichtung unter einem in Fahrtrichtung geöffneten Winkel angeordnet sind. Die Messerräder 113 schneiden vor den Lagern 108, dem Kettengetriebe 109 bzw. den Kufen 112 in den Boden ein und verlagern die erfaßte Erde aufgrund ihrer Schrägstellung zur Gerätemitte hin, so daß dementsprechend auch die Erde zweier andernfalls für den Zinkenrotor 103 nicht erreichbarer schmaler Bodenstreifen vom Zinkenrotor durchgearbeitet wird. Da die vom Zinkenrotor 103 erfaßte Erde hinter dem Zinkenrotor auch zur Seite geschleudert wird, werden auch die Bodenstreifen in Fahrtrichtung hinter den Lagern 108, dem Kettengetriebe 109 bzw. den Kufen 112 von durchgearbeiteter Erde abgedeckt, wobei seitliche Leitplatten 114 am Gehäuse des Zinkenrotors 103 verhindern, daß aufgeworfene Erde zu weit seitwärts auf gegebenenfalls bereits bei einer vorangegangenen Überfahrt bearbeiteten Boden gelangt.

Die Halterungen 115 der Messerräder 113 sind an einem rohrförmigen Balken 116 befestigt, welcher quadratisches oder ein sonstiges unrundes Profil aufweist und seinerseits am Gehäuse bzw. Rahmen des Zinkenrotors 103 befestigt ist. Dabei können die Halterungen 115 mit entsprechenden Anschlußstücken, deren Querschnitt dem Innenquerschnitt der Balken 116 angepaßt ist, teleskopartig in die Stirnenden des Balkens 116 eingeschoben sein, wobei die Anschlußstücke mit am Balken 116 angeordneten Klemmschrauben 117 in Gerätequerrichtung verstellbar festgehalten sind. Die Verstellbarkeit kann gegebenenfalls auch dazu dienen, die Messerräder 113 zum Transport des Gerätes zur Gerätemitte hin zu verstellen, wenn das Gerät bei Anordnung der Messerräder 113 in Arbeitsstellung die zulässige Straßenfahrbreite überschreiten würde.

Anstelle der Messerräder 113 können gegebenenfalls auch andere Werkzeuge mit entsprechender Wirkung angeordnet sein, beispielsweise feststehende, in den Boden eingreifende Leitbleche od.dgl., welche gegebenenfalls auch als Teil der Seitenwandungen des Gehäuses des Zinkenrotors 103 angeordnet sein können.

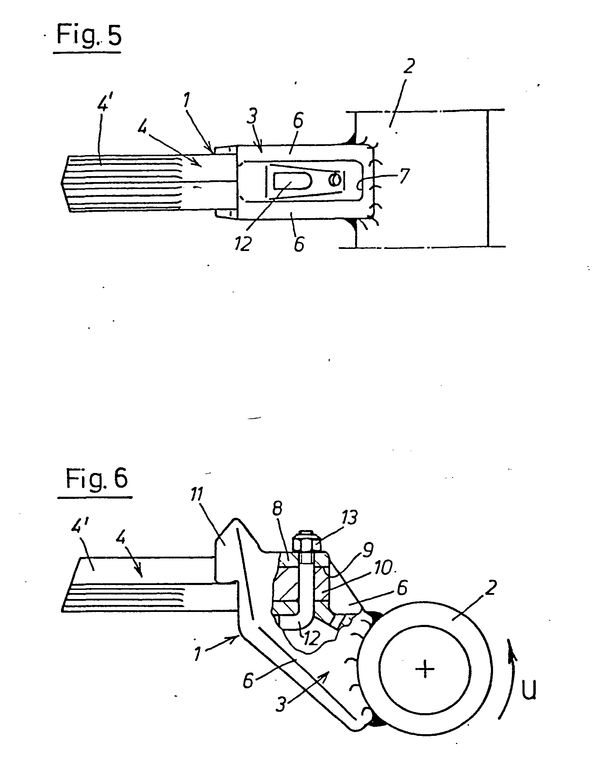

Die Zinken 1 bestehen bei der Ausführungsform der Figuren 5 und 6 im wesentlichen aus einem an der Rotorachse 2 fest angeordneten geschmiedeten Haltearm 3 sowie einem daran austauschbar angeordneten Endstück 4, dessen Endbereich 4' zur eigentlichen Bodenbearbeitung dient.

Der Haltearm 3 ist gegenüber dem Endstück 4 unter einem in Umlaufrichtung U des Zinkenrotors 103 geöffneten stumpfen Winkel angeordnet, derart, daß ein von der Rotorachse 2 zum freien Ende des Endstückes 4 verlaufender Radialstrahl den Verbindungsbereich zwischen Rotorachse 2 und Haltearm 3 etwa in der Mitte (bei Achsansicht des Zinkenrotors 103) durchsetzt.

Der Haltearm 3 besitzt im wesentlichen H-förmigen Querschnitt. Am achsseitigen Ende des Haltearmes 3 ist zwischen den H-Schenkeln 6 eine der Krümmung der Umfangsfläche der Rotorachse 2 angepaßte Verbindungsfläche 7 ausgebildet, die mit der Rotorachse 2 verschweißt ist. Diese Verbindungsfläche 7 umfaßt die Rotorachse in Umfangsrichtung U auf einem etwa einem Viertelkreis entsprechenden Bereich.

Am äußeren Ende des Haltearmes 3 ist zwischen den H-Schenkeln 6 ein hülsenartiges Teil 8 angeordnet, dessen Außendurchmesser etwa der von Außenseite zu Außenseite der H-Schenkel 6 gemessenen Breite der Haltearme 3 entspricht. In die Bohrung 9 des hülsenartigen Teiles 8 ist das Endstück 4 mit einem verjüngten Teil 10 eingesetzt. Auf der entgegen der Umlaufrichtung U des Zinkenrotors 103 weisenden Seite des Endstückes 4 ist am hülsenartigen Teil 8 ein dessen Stirnende überragender, verdickter Rand 11 ausgebildet, welcher die H-Schenkel 6 U-förmig verbindet und das Endstück 4 im Bereich seines an das verjüngte Teil 10 anschließenden dicken Mittelbereiches abstützt, welcher beispielsweise quadratischen Querschnitt haben kann, während das verjüngte Teil 10 beispielsweise kreisförmigen Querschnitt aufweist.

Aufgrund dieser Anordnung werden auf das Endstück 4 entgegen der Umlaufrichtung U wirkende Querkräfte direkt über den verdickten Rand 11 in den Haltearm 3 eingeleitet. Gleichzeitig verhindert die Querschnittsänderung zwischen dem verjüngten Teil 10 und dem Mittelbereich des Endstückes 4 ein zu weites Eindringen desselben in das hülsenartige Teil 8 sowie ein Verkeilen des Endstückes 4 in der Bohrung 9. Das Endstück 4 nimmt also eine außerordentlich stabile Lage ein, die lediglich gesichert werden muß. Das dazu dienende Sicherungselement wird keinerlei starken mechanischen Belastungen ausgesetzt.

Als Sicherungselement dient ein Bolzen 12, z.B. ein Winkelbolzen, welcher eine im verjüngten Teil 10 des Endstückes 4 sowie im hülsenartigen Teil 8 angeordnete Querbohrung durchsetzt, die zwischen den H-Schenkeln 6 parallel zu denselben angeordnet ist. Dabei wird das abgewinkelte Ende bzw. der Kopf des Bolzens 12 innerhalb der in Umlaufrichtung U des Zinkenrotors 103 geöffneten Auskehlung zwischen den H-Schenkeln 6 im Übergangsbereich zum hülsenartigen Teil 8 aufgenommen. Das andere Ende des Bolzens 12 ist mit einem Gewinde versehen, auf das eine Mutter 13 aufgeschoben ist, die neben dem verdickten Rand 11 leicht zugänglich angeordnet ist.

Das Endstück 4 ist gemäß den Figuren 5 und 6 im wesentlichen als Vierkantstab mit quadratischem Querschnitt ausgebildet, wobei das Endstück 4 derart angeordnet ist, daß eine Kante des Vierkantstabes als Keilspitze in Umlaufrichtung U weist.

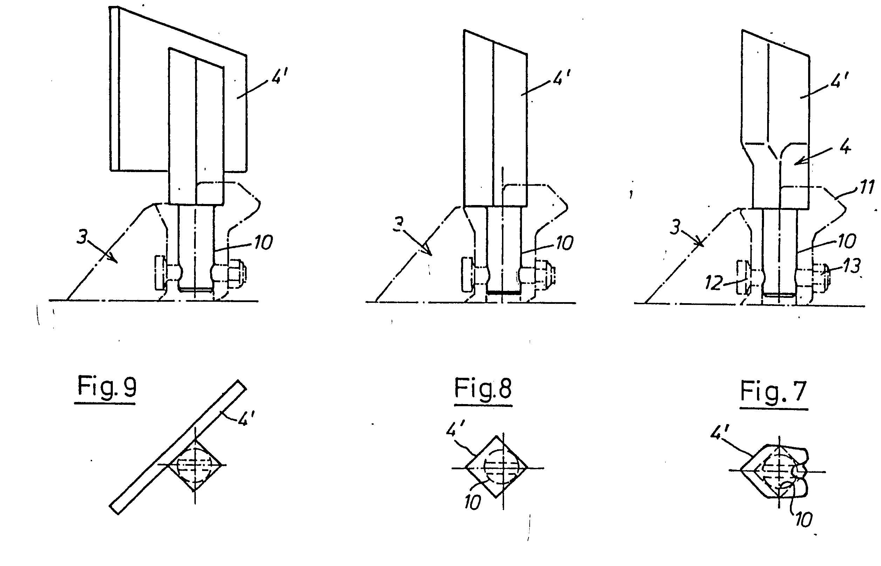

Gegebenenfalls kann das Endstück 4 gemäß Fig. 7 einen verdickten Endbereich 4' aufweisen, indem beispielsweise der an das verjüngte Teil 10 anschließende Mittelbereich des Endstückes 4 quadratischen Querschnitt hat, entsprechend einem Vierkantstab, und dieser Vierkantstab im Endbereich 4' durch Aufschweißen den in Fig. 7 dargestellten Querschnitt erhält. Dieser in Umlaufrichtung U verstärkte Querschnitt ist insofern vorteilhaft, als der Endbereich 4' trotz Verschleißes während der Bodenarbeit über vergleichsweise lange Zeit eine annähernd gleichbleibende Querabmessung behält.

Fig. 8 zeigt, daß als Endstücke 4 gegebenenfalls auch Vierkantstäbe od.dgl. mit sehr großem Querschnitt eingesetzt werden können, wenn das verjüngte Teil 10 außermittig an den Vierkantstab anschließt. Schließlich zeigt Fig. 9 die Möglichkeit, den Endbereich 4' schaufelartig auszubilden, indem an einen an das verjüngte Teil 10 anschließenden Vierkantstab ein die Schaufelfläche bildendes Plattenteil angeschweißt ist, welches zur Umlaufrichtung U schräggestellt ist, um beim Eingriff in den Boden Erdreich verstärkt zu einer Seite zu drängen.

Die in Fig. 9 schematisch dargestellten Schaufelzinken werden bevorzugt im Bereich der vom Zugfahrzeug hinterlassenen Spuren angeordnet, um die von den Rädern des Zugfahrzeuges zur Seite gedrängte Erde wieder zurückzuverlagern.

Die übrigen zuvor dargestellten Zinken haben eine im wesentlichen symmetrische Arbeitswirkung und suchen die erfaßte Erde zu beiden Seiten hin wegzudrängen.

Bei entsprechender Umlaufgeschwindigkeit und hinreichendem Querschnitt der Endbereiche 4' können die Zinken 1 mit vergleichsweise großem Abstand voneinander in Achsrichtung des Zinkenrotors 103 angeordnet sein, wobei jeder Zinken 1 in einer eigenen Radialebene bezüglich der Rotorachse 2 angeordnet ist.

Wie in Fig. 1 schematisch dargestellt ist, können die Endstücke 4 der Zinken an den Stirnenden der Rotorachse 2, insbesondere auf der Seite des Getriebes 109, nach auswärts seitlich abgebogen sein, so daß der jeweilige Zinken 1 auch Erde seitlich der Befestigungsflansche 118 der Rotorachse 2 zu erfassen vermag. Da jeder Zinken 1 eine gewisse Breitenwirkung hat, kann auf diese Weise gegebenenfalls erreicht werden, daß die Arbeitsbreite des Zinkenrotors etwa der Gerätebreite A entspricht.

Die Befestigungsflansche 118 sind im Beispiel der Fig. 1 mit dem benachbarten H-Schenkel 6 (vgl. Fig. 5) des jeweils äußeren Zinkens 1 verschweißt.

Die Prallplatte 119 ist doppelwandig ausgebildet, indem die Außenwand 122 an der Schwenkachse 123 bzw. Scharnierteilen od.dgl. befestigt ist und die Innenwand 124 an ihren oberen und unteren Rändern unter Zwischenschaltung von Gummi- bzw. Kunststoffmatten 125 und 126 an der Außenwand 122 angeschraubt ist. Dabei liegt die Matte 125 mit ihrem freien Rand an dem Querholm 120 an, so daß der zwischen dem Querholm 120 und der Prallplatte 119 gebildete Spalt abgeschlossen wird und die Schwenkachse 123 bzw. die entsprechenden Schwenkgelenke der Prallplatte 119 gegen Verschmutzungen durch vom Zinkenrotor 103 aufgeworfenes Erdreich geschützt sind. Die Matte 126 verlängert die Prallplatte 119 nach unten und streicht gegebenenfalls über den vom Zinkenrotor 103 bearbeiteten Boden.

## Patentansprüche

1. Bodenbearbeitungsgerät für die Landwirtschaft mit einem eigenen Antrieb, z.B. über Zapfwelle, aufweisenden Zinkenrotor (103), dessen Rotorwelle bzw. -nabe (2) etwa quer zur Fahrt- bzw. Arbeitsrichtung des Bodenbearbeitungsgerätes angeordnet ist und dessen Zinken (1) bei Umlauf des Zinkenrotors (103) mit austauschbar in hülsenförmigen Halteteilen (8) angeordneten Zinkenteilen (4), deren Längsachsen mit radialem Abstand an der Achse der Rotorwelle bzw. -nabe (2) vorbeilaufen, in die Bodenfläche eingreifen sowie erfaßte Bodenschichten unter Lockerung und Einebnung vermengen, wobei die Halteteile (8) an Haltearmen (3) und die als Zinkenendstücke (4) ausgebildeten austauschbaren Zinkenteile sowie die Haltearme (3) — bei Achsansicht des Zinkenrotors (103) — unter einem in Umlaufrichtung (U) geöffneten Winkel zueinander angeordnet sind, derart, daß ein jeweils von der Achse der Rotorwelle bzw. -nabe (2) zum freien Ende (4') des jeweiligen Zinkenendstückes (4) verlaufender Radialstrahl den Verbindungsbereich zwischen der Rotorwelle bzw. -nabe (2) und dem Halterm (3) in einem etwa mittleren Bereich durchsetzt, dadurch gekennzeichnet, daß jedes Zinkenendstück (4) auf der entgegen der Umlaufrichtung (U) weisenden Außenseite seines Mittelabschnittes, welcher an den im Halteteil (8) aufgenommenen Abschnitt (10) des Zinkenendstückes (4) anschließt und dicker als der zuletzt genannte Abschnitt (10) ist, von einem am jeweiligen Haltearm (3) ausgebildeten, an das hülsenförmige Halteteil (8) anschließenden verstärkten Rand (11) abgestützt ist, welcher die Außenseite U-förmig umfaßt.

2. Bodenbearbeitungsgerät nach Anspruch 1, dadurch gekennzeichnet, daß die freien Enden (4') und/oder der Mittelabschnitt jedes Zinkenendstückes (4) unrunden, z.B. quadratischen, Querschnitt aufweist.

3. Bodenbearbeitungsgerät nach einem der Ansprüche 1 und 2, dadurch gekennzeichnet, daß die etwa C- oder H-artiges Profil aufweisenden, vorzugsweise geschmiedeten, Haltearme (3) an ihren radial inneren Enden eine zwischen den C- bzw. H-Schenkeln (6) erstreckte, der Krümmung der Umfangsfläche der Rotorachse (2) bzw. -nabe angepaßte Verbindungsfläche (7) und an ihren radial äußeren Enden die hülsenartigen Halteteile (8) aufweisen, deren Außendurchmesser etwa dem von Außenseite zu Außenseite der Schenkel (6) gemessenen Breite der Haltearme (3) entspricht und deren Aufnahmeöffnung zwischen den Schenkeln (6) etwa parallel zu denselben verläuft, und daß der den Mittelabschnitt des Endstückes (4) abstützende Rand (11) die Schenkel (6) U-artig verbindet.

4. Bodenbearbeitungsgerät nach einem der Ansprüche 1 bis 3, dadurch gekennzeichnet, daß sich der mit der Rotorachse (2) bzw. -nabe verschweißte Verbindungsbereich bzw. die Verbindungsfläche (7) der Haltearme (3) etwa über einen Viertelkreis erstrecken.

5. Bodenbearbeitungsgerät nach einem der Ansprüche 1 bis 4, dadurch gekennzeichnet, daß die an den Enden der Rotorachse (2) angeordneten Haltearme (3) als Teil dort angeordneter Befestigungsflansche (118) der Rotorachse (2) ausgebildet bzw. mit den Befestigungsflanschen (118) verbunden sind.

6. Bodenbearbeitungsgerät nach einem der Ansprüche 1 bis 5, dadurch gekennzeichnet, daß die Endbereiche (4') der endseitig der Rotorachse (2) angeordneten Zinken (1), bzw. zumindest der Endbereich (4') der am getriebeseitigen Ende der Rotorachse (2) angeordneten Zinke (1) in Richtung der Rotorachse zur jeweiligen Seite des Gerätes hin ausgestellt ist.

7. Bodenbearbeitungsgerät nach einem der Ansprüche 1 bis 6, dadurch gekennzeichnet, daß seitlich vor dem Zinkenrotor (103), zumindest auf der Seite des die Rotorachse (2) antreibenden Rotorgetriebes (109), ein in den Boden eingreifendes Schneid- bzw. Schälwerkzeug (113) angeordnet ist, welches die Erde eines in Fahrtrichtung vor einem seitlichen Rotorlager (108) bzw. vor dem Rotorgetriebe (109) liegenden Bodenstreifen seitwärts in den Arbeitsbereich des Zinkenrotors (103) schiebt.

8. Bodenbearbeitungsgerät nach Anspruch 7, dadurch gekennzeichnet, daß als Schneid- bzw. Schälwerkzeug jeweils ein zur Fahrtrichtung schräggestelltes Messerrad (113) angeordnet ist.

9. Bodenbearbeitungsgerät nach einem der Ansprüche 7 oder 8, dadurch gekennzeichnet, daß das Schneid- bzw. Schälwerkzeug (113) mittels einer verstellbaren Halterung (115) aus einer Arbeitsstellung in eine zur Gerätemitte hin verschobene Transportstellung verschiebbar ist.

10. Bodenbearbeitungsgerät nach einem der Ansprüche 1 bis 9, gekennzeichnet durch seitliche höhenverstellbare Kufen (112) zur Begrenzung von Taumelbewegungen des Gerätes sowie als Schutz der seitlichen Rotorlager (108) bzw. des Rotorgetriebes (109).

11. Bodenbearbeitungsgerät nach einem der Ansprüche 1 bis 10, dadurch gekennzeichnet, daß die Endbereiche (4') der Zinken (1) im Bereich der Spur eines mit dem Gerät gekoppelten Zugfahrzeuges größeren Querschnitt — in Umlaufrichtung (U) gesehen — als die übrigen Zinken (1) aufweisen.

12. Bodenbearbeitungsgerät nach Anspruch 11, dadurch gekennzeichnet, daß im Spurbereich Zinken (1) mit schaufelartigen Endbereichen (Fig. 9) angeordnet sind, wobei die Schaufelflächen, vorzugsweise zur Seitwärtsverlagerung der Erde, unter einem Winkel zur Umlaufrichtung (U) angeordnet sind.

13. Bodenbearbeitungsgerät nach einem der Ansprüche 1 bis 12, dadurch gekennzeichnet, daß hinter dem Zinkenrotor (103) eine Prallplatte (119) unter Schwenkung um eine Querachse verstellbar und federnd angeordnet ist, und daß diese Prallplatte (119) vorzugsweise doppelwandig mit an der Schwenkachse (123) gelagerter Außenwand (122) und an ihren oberen und unteren Rändern unter Zwischenschaltung elastischer Matten (125, 126) auf der Außenwand (122) befestigter Innenwand (124) ausgebildet ist, wobei die am unteren Rand angeordnete Matte (126) eine nachgiebige Fortsetzung der Prallplatte (119) bildet und die am oberen Rand angeordnete Matte (125) einen im Bereich der Schwenkachse (123) gebildeten Spalt zwischen Prallplatte (119) und Rotorgehäuse als Schutz gegen Verschmutzung der Schwenkachse (123) bzw. Schwenkgelenke abdeckt.

**Revendications**

1. Appareil de travail du sol pour l'agriculture, comprenant un rotor à dents (103) possédant son propre entraînement, par exemple par l'intermédiaire d'un arbre de prise de force, dont l'arbre ou le moyeu (2) du rotor est disposé à peu près transversalement au sens de la marche ou du travail de l'apparei 1 de travail du sol, et dont les dents (1) mordent dans la surface du sol et mélangent les couches de terre attaquées en même temps qu'elles les ameublissent et les aplanissent, dans la rotation du rotor à dents (103), à l'aide de parties de dents (4) qui sont montées interchangeables dans des parties de fixation (8) en forme de manchon et dont les axes longitudinaux passent à un certain écartement radial de l'axe de l'arbre ou du moyeu (2) du rotor, les parties de fixation (8) sur des bras de fixation (3) et les parties de dents interchangeables, qui constituent des embouts de dents (4), et les bras de fixation (3) formant entre eux un angle qui s'ouvre dans le sens de la rotation (U) — dans une vue prise selon l'axe du rotor à dents (103) — de tel le manière qu'un rayon s'étendant de l'axe de l'arbre ou du moyeu du rotor (2) jusqu'à l'extrémité libre (4) de l'embout de dent considéré (4) coupe la région de l'assemblage entre l'arbre ou le moyeu du rotor et le bras de fixation (3) dans une zone à peu près centrale; caractérisé en ce que chaque embout de dent (4) est soutenu, sur le côté extérieur, qui regarde en sens inverse du sens de rotation (U), de son segment central qui fait suite au segment (10) de l'embout de dent reçu dans la partie de fixation (8) et qui est plus épais que ce dernier segment, par un bord renforcé (11) formé sur le bras de fixation (3) respectif, à la suite de la partie de fixation (8) en forme de manchon et qui encadre le côté extérieur en formant un U.

2. Appareil de travail du sol selon la revendication 1, caractérisé en ce que les extrémités libres (4') et/ou le segment central de chaque embout de dent (4) représentent une section non circulaire, par exemple carrée.

3. Appareil de travail du sol selon une des revendications 1 et 2, caractérisé en ce que les bras de fixation de préférence forgés (3), qui présentent un profil à peu près en C ou en H, possèdent, à leur extrémité radialement intérieure, une surface d'assemblage (7) qui s'étend entre les branches (6) du C ou du H et qui est adaptée à la courbure de la surface circonférentielle de l'axe (2) ou du moyeu du rotor et, à leur extrémité radialement extérieure, possèdent la partie de fixation (8) en forme de manchon, dont le diamètre extérieur correspond à peu près à la largeur des bras de fixation (3), mesurée de face extérieure à face extérieure des branches (6), et dont l'ouverture réceptrice comprise entre les branches (6) s'étend à peu près parallèlement à ces dernières, le bord (11) qui donne appui au segment central de l'embout (4) reliant les branches précitées (6) en formant un U.

4. Appareil de travail du sol une des revendications 1 à 3, caractérisé en ce que la région d'assemblage soudée à l'axe (2) du rotor ou au moyeu du rotor, ou la surface d'assemblage (7) des bras de fixation (3) s'étend à peu près sur un quart de cercle.

5. Appareil de travail du sol selon une des revendications 1 à 4, caractérisé en ce que les bras de fixation (3) disposés aux extrémités de l'axe (2) du rotor constituent une partie de collerettes de fixation (118) de l'axe (2) du rotor qui sont fixées à cet endroit, ou bien sont assemblés aux collerettes de fixation (118).

6. Appareil de travail du sol selon une des revendications 1 à 5, caractérisé en ce que les régions terminales (4') des dents (1) disposées en bout de l'axe (2) du rotor ou, du moins la région terminale (4') des dents situées à l'extrémité côté transmission de l'axe (2) du rotor, peuvent être déportées vers le côté correspondant de l'appareil dans la direction parallèle à l'axe du rotor.

7. Appareil de travail du sol selon une des revendications 1 à 6, caractérisé en ce qu'on peut prévoir latéralement et en avant de l'axe du rotor, du moins sur le côté du mécanisme à engrenages du rotor qui entraîne l'axe du rotor, des outils de coupe ou d'écroûtage qui mordent dans le sol et qui ramènent latéralement dans la zone de travail du rotor la terre d'une bande de sol qui se trouve en avant d'un palier latéral du rotor ou en avant de la transmission du rotor, considéré dans le sens de la marche.

8. Appareil de travail du sol selon la revendication 7, caractérisé en ce que, en tant qu'outil de coupe ou d'écroûtage, il est prévu un disque coupant (113) orienté obliquement au sens de la marche.

9. Appareil de travail du sol selon une des revendications 7 et 8, caractérisé en ce que l'outil de coupe ou d'écroûtage (113) peut être amené dans une position de transport déportée vers le centre de l'appareil, à l'aide d'une monture réglable (115).

10. Appareil de travail du sol selon une des revendications 1 à 9, caractérisé par des patins latéraux (112) réglables en hauteur, servant à limiter les mouvements de vacillement de l'appareil, et servant également de protection des paliers latéraux (108) du rotor ou de protection de la transmission (109) du rotor.

11. Appareil de travail du sol selon une des revendications 1 à 10, caractérisé en ce que, dans la région de la trace d'un véhicule tracteur attelé à l'appareil, les régions terminales (4') des dents (1) présentent une plus grande section considéré dans le sens de la rotation (U) que les autres dents (1).

12. Appareil de travail du sol selon la revendication 11, caractérisé en ce que, dans la région de la trace, sont disposées des dents (1) possédant des régions terminales en forme de pelle (figure 9), les surfaces actives des pelles étant inclinées d'un certain angle par rapport à la direction (U) de la rotation, de préférence pour déplacer la terre latéralement.

13. Appareil de travail du sol selon une des revendications 1 à 12, caractérisé en ce qu'en arrière du rotor à dents (103), est disposée une plaque protectrice (119) qui est mobile en oscillation autour d'un axe transversal et munie d'un montage élastique, et en ce que cette plaque protectrice (19) est de préférence à double paroi, avec sa paroi extérieure (122) articulée sur l'axe oscillant (123), et sa paroi intérieure (124) fixée à la paroi extérieure (122) le long de ses bords supérieur et inférieur avec interposition de feuilles élastiques (125, 126), la feuille (126) disposée le long du bord intérieur formant un prolongement flexible de la plaque protectrice (119) et la feuille (125) disposée le long du bord supérieur obturant une fente formée dans la région de l'axe oscillant (123) entre la plaque protectrice (119) et le carter du rotor pour servir de protection contre l'encrassage de l'axe oscillant (123) ou des articulations d'oscillation.

**Claims**

1. Ground working apparatus for agriculture comprising a tyned rotor (103) having its own drive, for example via a power take-off shaft, with the rotor shaft or hub (2) of the tyned rotor being arranged approximately transverse to the direction of travel or working of the ground working apparatus, with the tynes (1) of the tyned rotor having tyne parts (4) interchangeably arranged in sleeve-like holding parts (8), with the longitudinal axes of the tyne parts extending with a radial spacing past the the axis of the rotor shaft or hub (2), and with the tynes engaging during rotation of the tyned rotor (103) into the surface of the ground and also mixing the layers of the ground while loosening up and levelling takes place, wherein the holding parts (8) are arranged on holding arms (3) and the interchangeable tyne parts, which are formed as tyne end pieces (4), as well as the holding elements (3) are arranged at an open angle to one another in the direction of rotation (U) in an axial view of the tyne rotor (103) in such a way that a radial ray extending from the axis of the rotor shaft or hub (2) to the free end (4') of the respective tyne end piece (4) passes through the connection region between the rotor shaft and hub (2) and the holding arm (3) in an approximately central region, characterised in that each tyne end piece (4) is supported at the outer side of its central portion which faces opposite to the direction of rotation (U), which adjoins the portion (10) of the tyne end piece received in the holding part (8) and which is thicker than the last named portion (10), by a reinforced rim (11) formed on the respective holding arm (3) adjoining the sleeve-like holding part (8), with the rim engaging in U-shaped matter around the outer side.

2. Ground working apparatus in accordance with claim 1, characterised in that the free ends (4') and/or the central portion of each tyne end piece (4) have a non-round, for example square cross-section.

3. Ground working apparatus in accordance with one of the claims 1 and 2, characterised in that the preferably forged holding arms (3), which have an approximately C- or H-like section, have a connection surface (7) at their radially inner ends which extends between the C- and H-limbs (6) and is matched to the curvature of the circumferential surface of the rotor axle (2) or hub, and have the sleeve-like holding parts (8) at their radially outer ends, with the outer diameter of the holding parts corresponding approximately to the width of the holding arms (3) measured from the outer side to the outer side of the limbs (6), and with the receiving opening of the holding parts extending between the limbs (6) approximately parallel to the latter; and in that the rim (11) which supports the central portion of the end piece (4) connects the limbs (6) in U-like manner.

4. Ground working apparatus in accordance with one of the claims 1 to 3, characterised in that the connection region or connection surface (7) of the holding arms (3) which is welded to the rotor axle (2) or hub extends over approximately a quarter circle.

5. Ground working apparatus in accordance with one of the claims 1 to 4, characterised in that the holding arms (3) at the ends of the rotor axle (2) are formed as part of the mounting flanges (118) for the rotor axle (2) which are arranged there, or are connected to the mounting flanges (118).

6. Ground working apparatus in accordance with one of the claims 1 to 5, characterised in that the end regions (4') of the tynes (1) which are arranged at the ends of the rotor axle (2), or at least the end region (4') of the tyne (1) arranged at the transmission end of the rotor axle (2), is directed in the direction of the rotor axle towards the respective side of the apparatus.

7. Ground working apparatus in accordance with one of the claims 1 to 6, characterised in that a cutting or peeling tool (113) which engages into the ground is arranged at least at the side of the rotor transmission (109) which drives the rotor axle (2) and pushes the earth of a strip of ground which lies in the direction of travel in front of a side-disposed rotor bearing (108), or in front of the rotor transmission (109), into the working region of the tyned rotor (103).

8. Ground working apparatus in accordance with claim 7, characterised in that a knife wheel (113) which is set obliquely to the direction of travel is respectively provided as the cutting or peeling tool.

9. Ground working apparatus in accordance with one of the claims 7 or 8, characterised in that the cutting or peeling tool (113) is displaceable by means of an adjustable holder (115) out of a working position into a transport position displaced towards the center of the apparatus.

10. Ground working apparatus in accordance with one of the claims 1 to 9, characterised by laterally vertically adjustable runners (112) for limiting the tumbling motions of the apparatus and also as protection for the lateral motor bearing (108) or for the rotor transmission (109).

11. Ground working apparatus in accordance with one of the claims 1 to 10, characterised in that the end regions (4') of the tynes (1) have a greater cross-section in the region of the track of a towing vehicle coupled to the apparatus as seen in the direction of rotation (U) than the remaining tynes (1).

12. Ground working apparatus in accordance with claim 11, characterised in that tynes (1) with spade-like end regions (Fig. 9) are arranged in the track region, with the blade surfaces preferably being arranged at an angle to the direction of rotation (U) for the sideways displacement of the earth.

13. Ground working apparatus in accordance with one of the claims 1 to 12, characterised in that an impact plate (119) which can swing about a transverse axis is adjustably and resiliently arranged behind the tyne rotor (103); and in that this impact plate (119) is preferably of double-wall construction with an outer wall (122) journalled at the pivot axle (123) and with an inner wall (124) secured to the outer wall (122) at its upper and lower edges with elastic mats (125, 126) being disposed therebetween, with the mat (126) arranged at the lower edge forming a resilient continuation of the impact plate (119) and with the mat (125) arranged at the upper edge covering a gap formed in the region of the pivot axle (123) between the impact plate (119) and the rotor housing as protection against contamination of the pivot axle (123) or of the pivot hinges.

Fig.1

EP 0 129 047 B1

Fig.2

<u>Fig. 3</u>

Fig. 4

Fig. 5

Fig. 6

Fig.7

Fig.8

Fig.9

6